# EUROPEAN PATENT SPECIFICATION

(11) **EP 3 835 747 B1**
(45) Date of publication and mention of the grant of the patent: **05.03.2025**
(21) Application number: 19214891.4
(22) Date of filing: 10.12.2019
(51) Int. Cl.: G01L 19/00, G01L 19/06, G01L 19/14

(54) **SENSOR ASSEMBLY**
SENSORANORDNUNG
ENSEMBLE CAPTEUR

(43) Date of publication of application: 16.06.2021
(73) Proprietor: Veoneer Sweden Safety Systems AB, 10302 Stockholm (SE)
(72) Inventor: TARTROU, Jean, 95800 Cergy-Pontoise (FR); LEBRUN, Gregory, 95800 Cergy-Pontoise (FR)
(74) Representative: Reichert & Lindner Partnerschaft Patentanwälte

(56) References cited:
- EP-A1- 3 118 600
- CN-A- 107 063 324
- US-A1- 2007 089 520
- US-A1- 2009 194 831

## Description

### FIELD OF THE INVENTION

The invention relates to a sensor assembly. Especially the invention relates to an which is used to detect an impact.

### DESCRIPTION OF THE BACKGROUND ART

International patent application WO 2014/028425 A1 relates to a sensor assembly for a motor vehicle adapted for sensing impacts including pedestrian impacts. The sensor assembly integrates functions of pressure based sensors used in combination with a compressible tube extending laterally across the front surface of the vehicle and the outboard front boundary areas of the front end of the vehicle. Both acceleration and pressure based sensors are mounted into an integrated sensor housing which is mounted in a desired position at the vehicle front fascia front boundary areas.

German patent application DE 10 2009 048 067 A1 relates to a sensor which has a sensing unit for recording a pressure change in a tubular body and detecting an impact on the pressure change. The sensor is arranged in a housing unit, and an adjusting unit adjusts pressure between the tubular body and a surrounding area.

The tubular body is pressurized-connected with the housing unit of the sensing unit, and the pressure is adjusted at the housing unit. A pressure compensation opening is provided at an inner side of the housing unit between the tubular body and the sensing unit and is arranged at the housing unit of the sensing unit.

The European Patent Application EP 3 118 600 A1 discloses a pressure sensor with a housing, defining an internal space, which is in fluid communication with the pressure sensor so that the pressure of gas within the internal space can be sensed by the pressure sensor. A first connection arrangement, allowing connection of the sensor to a substantially enclosed and compressible sensing member, so that variations in pressure in the sensing member are communicated to the internal space. A venting arrangement, allowing gas communication between the internal space and the surrounding atmosphere. The venting arrangement leads to an exit port. A filter arrangement having an inner end and an outer end and being positioned within the passage so that it partially occludes the passage. The filter arrangement having at least one flow path formed therein passing from the inner end to the outer end but preventing or substantially preventing the passage of water through the filter arrangement.

The Chinese Patent Application CN 107063324 A discloses a waterproof and breathable sensor protection mechanism, which comprises a protection cover, a sensor, a base material and a waterproof and breathable film. The sensor is arranged inside the protection cover. A first breathable hole is opened in the protection cover. A second breathable hole is opened in the base material.

The US Patent Application US 2007/089520 A1 discloses a pressure sensor with a case with an air passageway having a first opening leading to an inside of the case and a second opening leading to an outside of the case. The pressure sensing means that is placed inside the case and includes a pressure sensing surface for detecting pressure. A breathable filter that is provided with the air passageway to cover at least one of the first and second openings.

The US Patent Application US 2009/194831 A1 discloses an integrated pressure sensor assembly. The integrated pressure sensor assembly includes a printed circuit board assembly comprising a plurality of boards. A pressure die mounted on at least a portion of the printed circuit board assembly; and a housing engaged to the printed circuit board assembly. The printed circuit board assembly includes at least one pressure transmission channel and at least one electrical transmission channel. A filter prevents certain materials from receiving the pressure die.

### SUMMARY OF THE INVENTION

It is therefore an object of the present invention to provide a sensor assembly which enables a reliable determination of pressure changes (caused by an impact with a vehicle) and protects the inside of a housing of the sensor assembly from the ingress of dust and/or fluid.

The above object is achieved by a sensor assembly which comprises the features of claim 1.

According to an embodiment of the present invention a sensor assembly is disclosed. The sensor assembly comprises a housing which defines a hollow body. A formed connection defines a fluid communication from outside of the hollow body into the hollow body. A printed circuit board is placed in the hollow body, wherein the printed circuit board carries a pressure sensor. A ventilation connection of the housing allows an equalized pressure inside the hollow body. A further breathable seal is placed in the ventilation connection to avoid as well ingress of fluid, moisture, dirt or dust into the hollow body.

A pressure change, which might be caused by an impact with an object, is sensed by the pressure sensor. The pressure change is determined in relation to the external environmental conditions. A breathable seal is placed in relation to the connection. The fluid communication, caused by the pressure change, has to pass the breathable seal prior to causing a signal of the pressure sensor. The advantage is that the hollow body (internal sensor cavity) is protected from fluid, moisture, dirt or dust ingress.

According to the claimed invention, the sensor assembly has at least one first ventilation hole which provide the fluid communication from the connection to the hollow body. At least one second ventilation hole provide the fluid communication from the hollow body to the ventilation connection. The advantage is, that with the ventilation connection the pressure inside the sensor assembly is equalized with respect to external environment pressure conditions.

According to the claimed invention, a further breathable seal is placed in the ventilation connection and covers the at least one second ventilation hole which leads from the hollow body to the ventilation connection. The further breathable seal has the advantageous effect that no dirt, dust and/or moisture can ingress the hollow body through the ventilation connection.

According to a preferred embodiment of the invention, the breathable seal and the further breathable seal can be breathable and waterproof materials, e.g. foams, membranes or the like. The advantage of this embodiment is as well that the pressure inside the hollow body, which impacts the pressure sensor, is equalized with external environment conditions, and ventilation through the ventilation connection, which is identical to the connection for the inlet of the pressure change into the hollow body, is maintained. According to the embodiment described above, the breathable seal is a membrane which covers the connection into the hollow body and the ventilation connection out from the hollow body. In yet another embodiment, the membrane is waterproof and carries a marking.

According to an example which does not fall within the scope of the claimed invention, the at least one first ventilation hole is designed so that it provides the fluid communication from the hollow body to the ventilation connection. The ventilation connection ends on a left side and on a right side of the housing. In this example a further breathable seal is placed in the ventilation connection and covers the at least one first ventilation hole leading from the hollow body to the ventilation connection. As mentioned above, the further breathable seal can be a breathable and waterproof foam or other suitable materials are thinkable as well. In order to avoid fluid retention inside the ventilation connection (channel), in another an example which does not fall within the scope of the claimed invention, additional ventilation holes are formed on both sides of the further breathable seal. The additional ventilation holes provide the fluid communication from the ventilation connection out of the housing.

With the invention described herein the pressure sensor, positioned in a hollow body of the housing (cavity), is protected from fluid and dust ingress and the ventilation through holes or connections into the hollow body are kept free. Additionally, electronics and the pressure sensor inside the hollow body are protected against high jet water as well.

### BRIEF DESCRIPTION OF THE DRAWINGS

The numerous advantages of the disclosure may be better understood by those skilled in the art by reference to the accompanying figures in which:
**FIG. 1** shows a sectional view of a sensor assembly according to an embodiment of the present invention.
**FIG. 2** shows an enlarged view of the section of Fig. 1 which is marked with a dashed circle.
**FIG. 3** shows a perspective view of one example of the sensor assembly, which does not fall within the scope of the claimed invention.
**FIG. 4** shows a sectional view of the example shown in Fig. 3.
**FIG. 5** shows an enlarged view of the sensor assembly of Fig. 4, which is marked with a dashed rectangle.
**FIG. 6** shows a perspective view of a further example of the sensor assembly, which does not fall within the scope of the claimed invention.
**FIG. 7** shows a perspective sectional view of the example shown in Fig. 6.
**FIG. 8** shows a sectional view of a sensor assembly according to a further embodiment of the present invention.
**FIG. 9** shows an enlarged view of the section of Fig. 8 which is marked with a dashed square.

### DETAILED DESCRIPTION

Same reference numerals refer to same elements or elements of similar function throughout the various figures. Furthermore, only reference numerals necessary for the description of the respective figure are shown in the figures. The shown embodiments represent only examples of how the invention can be carried out. This should not be regarded as a limitation of the invention.

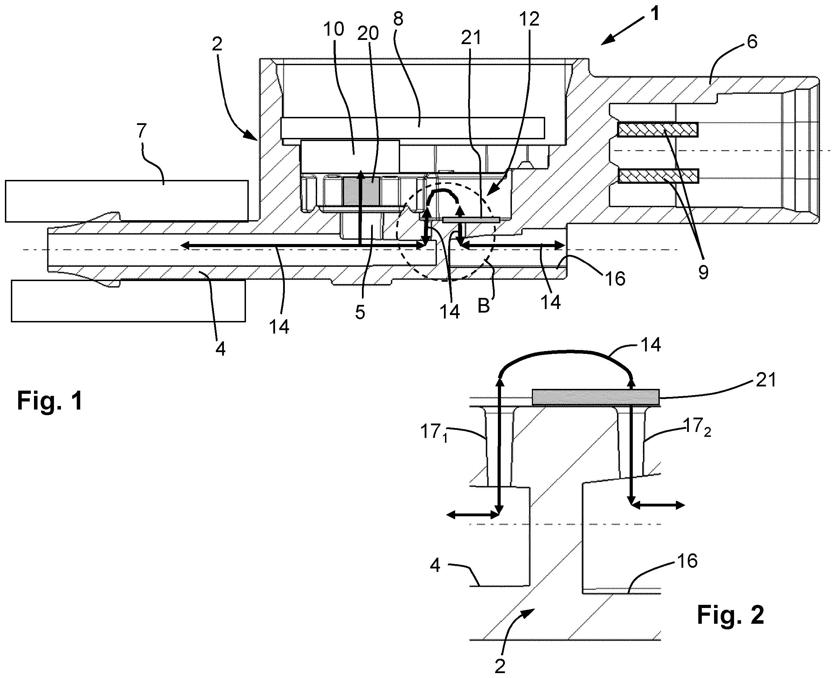

**Fig. 1** is a sectional view of sensor assembly 1 according to an embodiment of the present invention. Conveniently, the sensor assembly 1 has a housing 2 which is formed, for example, by injection moulding of a plastic material (thermoplast or resin). The housing 2 has an extending tube connection 4 and an electrical connector 6 formed thereon. According to the embodiment shown here, a deformable tube 7 is mounted to the extending tube connection 4. According to a preferred application of the deformable sensor assembly 1 the tube 7 is part of a system (not shown) which is used for impact detection in road usage of a vehicle. One detected impact, besides others, it the impact of a pedestrian (not shown) with a vehicle. Preferably, the deformable tube 7 is a silicon tube. Preferably, the electrical connector 6 includes internal terminals 9 which are electrically connected to a logic unit or a printed circuit board 8 which is mounted inside the housing 2. A pressure sensor 10 is mounted to the lower surface of the printed circuit board 8. The printed circuit board 8 is mounted within a hollow body 12 of the housing 2.

The formed on extending tube connection 4 of the sensor assembly 1 is in fluid communication 14 with the pressure sensor 10 via a connection 5. The fluid communication 14 with the hollow body 12 takes place via a breathable seal 20. In the embodiment shown here, the breathable seal 20 is a breathable and water repellent material (e.g. foam, membrane). The housing 2 has formed a ventilation connection 16 which is in fluid communication 14 with the tube connection 4 via at least one first ventilation hole 17₁ and at least one second ventilation hole 17₂. For example, the at least one first ventilation hole 17₁ connects the tube connection 4 with the hollow body 12, and at least one second ventilation hole 17₂ connects the hollow body 12 with the ventilation connection 16. Accordingly, the fluid communication 14 is established from the tube connection 4 to the ventilation connection 16.

**Fig. 2** shows an enlarged view of the section of Fig. 1 which is marked with a dashed circle B. The tube connection 4 is separated from the ventilation connection 16 by the material of the housing 2. The at least one first ventilation hole 17₁ and the least one second ventilation hole 17₂ establish the fluid communication 14 from the tube connection 4 to the ventilation connection 16. A further breathable seal 21 covers the least one second ventilation hole 17₂. The further breathable seal 21 is as well made from a breathable and a water repellent material. The further breathable seal 21 prevents dirt, dust and moisture from ingress into the hollow body 12 of the housing 2.

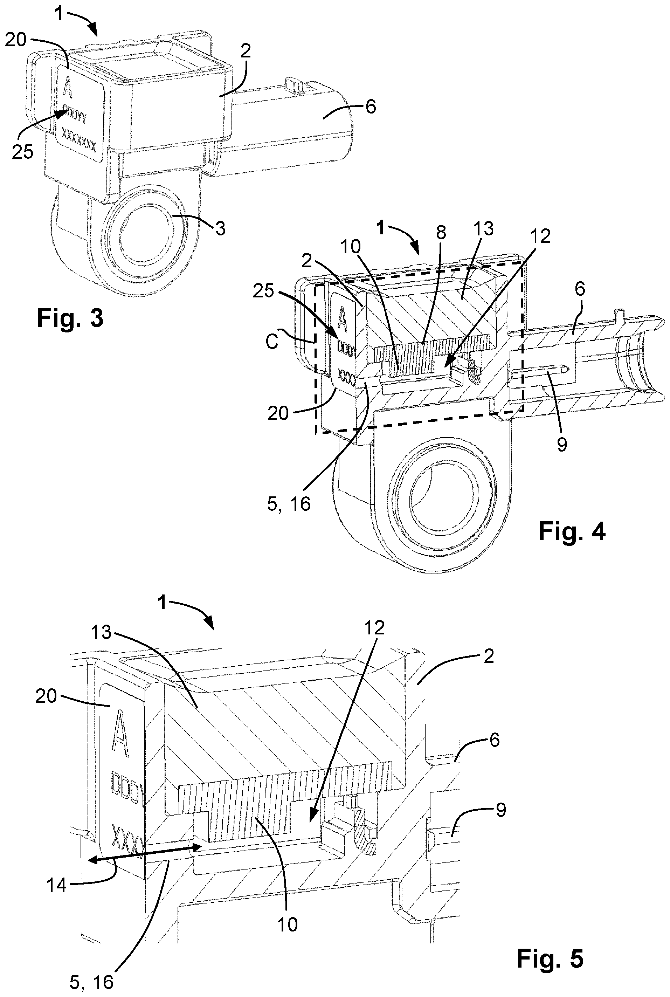

**Fig. 3** shows a perspective view of one example of the sensor assembly 1. The housing 2 of the sensor assembly 1 has a mounting element 3, which is permanently attached to the housing 2 by, for example, an injection moulding process. The housing 2 has the electrical connector 6 formed thereon. Opposite to the electrical connector 6, a breathable seal 20 is attached to the housing 2. The breathable seal 20 carries a marking 25. According to the example shown here, the breathable seal 20 is a membrane.

As shown in the sectional view of **Fig. 4** of the example of the sensor assembly 1 of Fig. 3, a connection 5 into the hollow body 12 and a ventilation connection 16 out from the hollow body 12 are covered by the breathable seal 20. Inside the hollow body 12, the pressure sensor 10 is positioned. The hollow body 12 of the housing is sealed with a cover 13, which is applied, for example, by a potting process. The cover 13, applied by the potting process, provides resistance to shock and vibration and supports the exclusion of water, moisture, or corrosive agents. In the potting process, the printed circuit board 8 (electronic assembly) is placed inside the housing 2. Then the cover 13 is attached to seal the hollow body 12. As mentioned already in connection with the embodiment of Fig. 1, the electrical connector 6 is an injection moulded part of the housing 2 and includes internal terminals 9 which are electrically connected to the printed circuit board 8 in the hollow body 12.

**Fig. 5** shows an enlarged view of the sensor assembly 1 of Fig. 4, which is marked with a dashed rectangle C. The breathable seal 20, which optionally is a membrane, covers the connection 5 into the hollow body 12 and a ventilation connection 16 out from the hollow body 12. The breathable seal 20 allows a fluid communication 14 into the hollow body 12 and a fluid communication 14 out of the hollow body 12. Consequently, a pressure change outside of the hollow body 12 can reach the pressure sensor 10 inside the hollow body 12. Thereby, the ingress of moisture, dirt or water hollow body 12 of the housing is avoided.

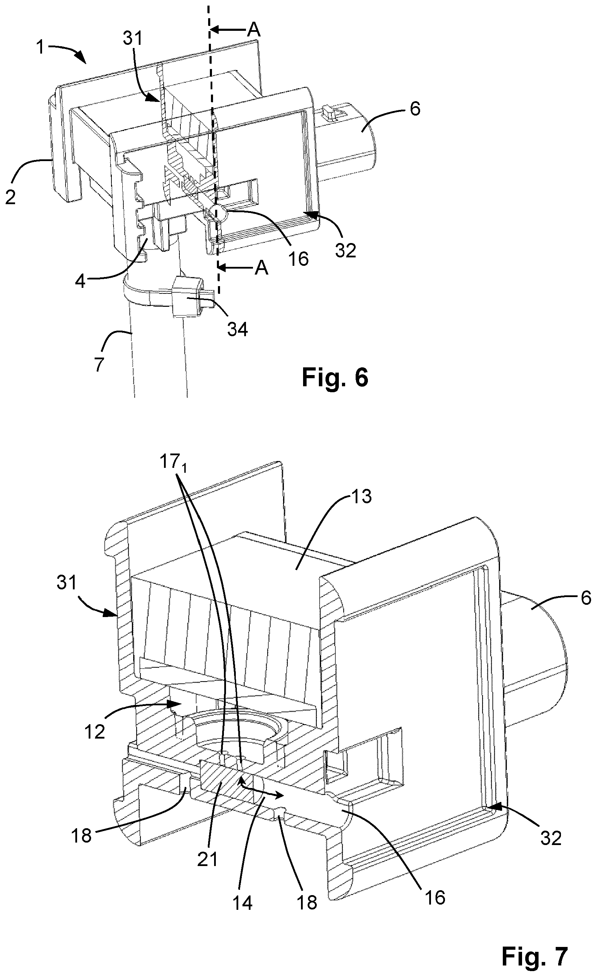

**Fig. 6** shows a perspective view of a further example of the sensor assembly 1.

The tube connection 4 with the deformable tube 7 mounted thereon and the electrical connector 6, formed with the housing 2, are arranged perpendicular to each other. The deformable tube 7 is mounted to the tube connection 4 for example with a cable strap 34. The ventilation connection 16 extends across the housing 2 from a left side 31 to a right side 32 of the housing 2.

**Fig. 7** shows a perspective sectional view along the cutting line A-A of the example of the sensor assembly 1 shown in Fig. 6. Here a further breathable seal 21 is placed in the ventilation connection 16. Thereby the further breathable seal 21 covers the at least one second ventilation hole 17₂ which provide the fluid communication 14 leading from the hollow body 12 to the ventilation connection 16. The breathable seal 20, arranged in relation with the connection 5 into the hollow body 12, and the further breathable seal 21 are, for example, breathable and waterproof foams.

As shown in Fig. 7, the ventilation connection 16 has formed at least one additional ventilation hole 18 on each side of the further breathable element 21. The additional ventilation holes 18 connect the ventilation connection 16 with the ambient air. The additional ventilation holes 18 help to avoid fluid retention in the ventilation connection 16. As shown in Figs. 4 and 5, the housing 2 is closed with a cover 13, which is applied, for example, by a potting process.

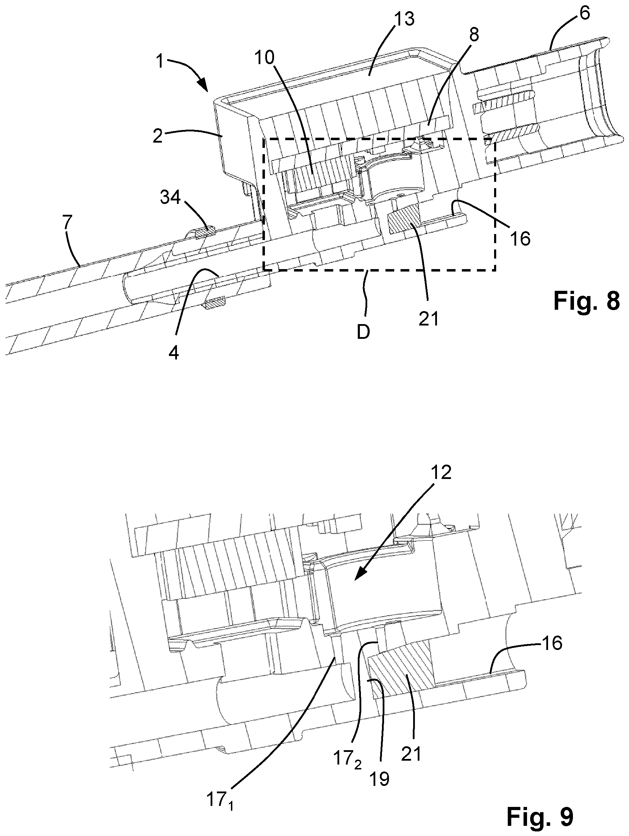

**Fig. 8** shows a sectional view of a sensor assembly 1 according to a further embodiment of the present invention. **Fig. 9** shows an enlarged view of the section of Fig. 8 which is marked with a dashed rectangle D. In this embodiment and the embodiment shown in Fig. 1, the tube connection 4 and the ventilation connection 16 are arranged in a 180° orientation, in one line, with respect to each other. There is no direct fluid communication between the tube connection 4 and the ventilation connection 16. The deformable tube 7 is mounted to the tube connection 4 with a cable strap 34 or the like. The printed circuit board 8 with the mounted pressure sensor 10 is positioned in the housing 2. The housing 2 is closed with a cover 13, which is applied, for example, by a potting process.

The enlarged view of Fig. 9 shows the position of the further breathable seal 21 in the ventilation connection 16. The further breathable seal 21 is positioned such that it covers the at least one second ventilation hole 17₂ from the hollow body 12 to the ventilation connection 16. Additionally, the further breathable seal 21 can abut against a separation wall 19 between the tube connection 4 and the ventilation connection 16. As mentioned in the embodiment disclosed in Fig. 1, the breathable seal 20 (see Fig. 1) is placed in the connection 5 leading to the hollow body 12. The further breathable seal 21 is for example a breathable and waterproof material.

It is believed that the present disclosure and many of its attendant advantages will be understood by the foregoing description, and it will be apparent that various changes may be made in the form, construction and arrangement of the components without departing from the disclosed subject matter or without sacrificing all of its material advantages. The form described is merely explanatory, and it is the intention of the following claims to encompass and include such changes. Accordingly, the scope of the invention should be limited only by the claims appended hereto.

### LIST OF REFERENCE NUMERALS

- 1: Sensor assembly
- 2: Housing
- 3: Mounting element
- 4: Tube connection
- 5: Connection
- 6: Electrical connector
- 7: Deformable tube
- 8: Printed circuit board
- 9: Electrical terminals
- 10: Pressure sensor
- 12: Hollow body
- 13: Cover
- 14: Fluid communication
- 16: Ventilation connection
- 17₁: First ventilation hole
- 17₂: Second ventilation hole
- 18: Additional ventilation hole
- 19: Separation wall
- 20: Breathable seal
- 21: Further breathable seal
- 25: Marking
- 31: Left side
- 32: Right side
- 34: Cable strap
- A-A: Cutting line
- B: Dashed circle
- C: Dashed rectangle
- D: Dashed rectangle

## Claims

1. A sensor assembly (1) comprising:
a housing (2) defining a hollow body (12),
a formed connection (5) defining a fluid communication (14) from outside of the hollow body (12) into the hollow body (12),
a printed circuit board (8) placed in the hollow body (12), wherein the printed circuit board (8) carries a pressure sensor (10), and
a ventilation connection (16);
a breathable seal (20) placed such that in relation to the connection (5), the fluid communication (14) has to pass the breathable seal (20) prior to reaching the pressure sensor (10);
at least one first ventilation hole (17₁) providing the fluid communication (14) from the connection (5) to the hollow body (12), and at least one second ventilation hole (17₂) providing the fluid communication (14) from the hollow body (12) to the ventilation connection (16); and
a further breathable seal (21) covering the at least one second ventilation hole (17₂) leading from the hollow body (12) to the ventilation connection (16).

2. The sensor assembly (1) as claimed in claim 1, wherein the further breathable seal (21) is placed in the ventilation connection (16) and thereby covering the at least one second ventilation hole (17₂).

3. The sensor assembly (1) as claimed in any of the preceding claims, wherein the breathable seal (20) and the further breathable seal (21) are a breathable and waterproof material.

## Patentansprüche

1. Eine Sensoranordnung (1), umfassend:
ein Gehäuse (2), das einen Hohlkörper (12) definiert,
eine geformte Verbindung (5), die eine Fluidverbindung (14) von außerhalb des Hohlkörpers (12) in den Hohlkörper (12) definiert,
eine gedruckte Schaltungsplatte (8), die in dem Hohlkörper (12) angeordnet ist, wobei die gedruckte Schaltungsplatte (8) einen Drucksensor (10) trägt, und
einen Belüftungsanschluss (16);
eine atmungsaktive Dichtung (20), die so angeordnet ist, dass die Fluidverbindung (14) in Bezug auf die Verbindung (5) die atmungsaktive Dichtung (20) passieren muss, bevor sie den Drucksensor (10) erreicht;
mindestens ein erstes Entlüftungsloch (17₁), das die Fluidverbindung (14) von der Verbindung (5) zu dem Hohlkörper (12) herstellt, und mindestens ein zweites Entlüftungsloch (17₂), das die Fluidverbindung (14) von dem Hohlkörper (12) zu dem Belüftungsanschluss (16) herstellt; und
eine weitere atmungsaktive Dichtung (21), die das mindestens eine zweite Belüftungsloch (17₂), das vom Hohlkörper (12) zum Belüftungsanschluss (16) führt, abdeckt.

2. Die Sensoranordnung (1) nach Anspruch 1, wobei die weitere atmungsaktive Dichtung (21) im Belüftungsanschluss (16) angeordnet ist und dadurch das mindestens eine zweite Belüftungsloch (17₂) abdeckt.

3. Die Sensoranordnung (1) nach einem der vorhergehenden Ansprüche, wobei die atmungsaktive Dichtung (20) und die weitere atmungsaktive Dichtung (21) aus einem atmungsaktiven und wasserdichten Material bestehen.

## Revendications

1. Un ensemble capteur (1) comprenant
un boîtier (2) définissant un corps creux (12),
une connexion formée (5) définissant une communication de fluide (14) de l'extérieur du corps creux (12) dans le corps creux (12),
une carte de circuit imprimé (8) placée dans le corps creux (12), dans laquelle la carte de circuit imprimé (8) porte un capteur de pression (10), et
un raccord de ventilation (16) ;
un joint respirant (20) placé de telle sorte que, par rapport à la connexion (5), la communication de fluide (14) doive passer par le joint respirant (20) avant d'atteindre le capteur de pression (10) ;
au moins un premier trou de ventilation (17₁) assurant la communication de fluide (14) de la connexion (5) vers le corps creux (12), et au moins un deuxième trou de ventilation (17₂) assurant la communication de fluide (14) du corps creux (12) vers le raccord de ventilation (16) ; et
un autre joint respirant (21) couvrant l'au moins un deuxième trou de ventilation (17₂) partant du corps creux (12) vers la connexion de ventilation (16).

2. L'ensemble capteur (1) selon la revendication 1, dans lequel l'autre joint respirant (21) est placé dans le raccord de ventilation (16) et couvre ainsi l'au moins un deuxième trou de ventilation (17₂).

3. L'ensemble capteur (1) selon l'une des revendications précédentes, dans lequel le joint respirant (20) et l'autre joint respirant (21) sont constitués d'un matériau respirant et imperméable.
